# EUROPÄISCHE PATENTSCHRIFT

(11) **EP 0 346 563 B1**
(45) Veröffentlichungstag und Bekanntmachung des Hinweises auf die Patenterteilung: **10.02.1993**
(21) Anmeldenummer: 89102052.1
(22) Anmeldetag: 07.02.1989
(51) Int. Cl.: G01G 7/04

(54) **Waage mit elektromagnetischer Lastkompensation**
Balance using electromagnetic load compensation
Balance avec compensation électromagnétique de charge

(30) Priorität: 14.06.1988 CH 2273/88
(43) Veröffentlichungstag der Anmeldung: 20.12.1989
(73) Patentinhaber: Mettler-Toledo AG, 8606 Greifensee (CH)
(72) Erfinder: Kunz, Peter, CH-8625 Gossau (CH)

(56) Entgegenhaltungen:
- EP-A- 0 039 249
- EP-A- 0 143 169
- FR-A- 2 127 595
- GB-A- 2 032 112

## Beschreibung

Die vorliegende Erfindung bezieht sich auf eine Waage mit elektromagnetischer Lastkompensation, bei der die Lastkompensation durch einen Kompensationsstrom in Form von Gleichstromimpulsen mit lastabhängiger Impulsdauer bewirkt wird und ein von der lastabhängigen Auslenkung der Waage abgeleitetes Regelsignal die Impulsdauer der Gleichstromimpulse bestimmt, wobei das Regelsignal einen proportionalen, einen integralen und einen differentialen Regelsignalanteil aufweist.

Eine Waage dieser Art ist z.B. in der DE-OS 22 10 446 beschrieben. Sie umfasst eine elektromagnetische Kompensationseinrichtung, die einer lastabhängigen Auslenkung der Waage entgegenwirkt, eine Gleichstromquelle, die an die Kompensationseinrichtung periodisch anschaltbar ist und dieser Gleichstromimpulse zuführt, eine die Anschaltdauer innerhalb jeder Anschaltperiode steuernde Regelschaltung, bestehend aus einem auf eine Auslenkung der Waage aus der Nullage ansprechenden Nullage-Detektor, einem Integrier-und Differenzierglieder enthaltenden Regelverstärker, einer zwischen der Gleichstromquelle und der Kompensationseinrichtung vorgesehenen Schalteinrichtung und einer diese steuernden Vergleichschaltung, welche während jeder Anschaltperiode eine vom Regelverstärker abgegebene Spannung mit einer zeitlich grösser werdenden Spannung vergleicht, ferner einen Zählimpulsgenerator, dessen während jeder Anschaltdauer der Gleichstromquelle abgegebene Zählimpulse ein Mass für die Wägelast darstellen und über einen Zähler einer digitalen Anzeigeeinrichtung zugeführt werden.

Elektromagnetisch lastkompensierende Waagen, die in der beschriebenen Weise mit einem PID-Regler arbeiten, können zwar hohe Einstellgeschwindigkeiten erreichen, neigen aber bei ungenauer Reglereinstellung zum Pendeln um die Nullage. Dadurch wird die vorteilhafte Wirkung des PID-Reglers in bezug auf die Einstellgeschwindigkeit vermindert. Die Waage kommt infolge der Pendelbewegung nur allmählich zum Stillstand, weshalb sich die Auswertung, d.h. die Ablesung oder Weiterverarbeitung des Messergebnisses verzögert. Diese störende Erscheinung ist besonders ausgeprägt bei hochempfindlichen Waagen und kann unter der Wirkung von die Waage beinflussenden Erschütterungen, z.B. Gebäudevibrationen, sogar dazu führen, dass die Anzeige für die Dauer solcher Einflüsse überhaupt nicht zum Stillstand kommt. Es ist zwar durchaus möglich, mit einer genauen Einstellung des PID-Reglers einen aperiodischen Verlauf des Einschwingvorganges zu erreichen, also Schwankungen der Regelabweichung zu vermeiden. Das Einschwingverhalten von serienmässig hergestellten Regelschaltungen ist jedoch beim Verzicht auf eine Justierung jedes einzelnen PID-Reglers gewissen Streuungen unterworfen. In der Praxis führt das meist zu einem überwiegenden Einfluss des differentialen Regelsignalanteils und damit zu einem periodischen Einschwingvorgang.

Messwertschwankungen solcher Art lassen sich zwar mit Filtern herabsetzen, aber meist nicht ganz unterdrücken. Der Einsatz von Filtern zur Störsignalunterdrückung hat jedoch den Nachteil, dass die Regelgeschwindigkeit der Regelschaltung in unerwünschter Weise vermindert wird. Alle verfügbaren Massnahmen, die bezwecken, aus dem schwankenden Messwertsignal einen Mittelwert zu bilden, haben aber nicht nur eine Verzögerung in der Messwertbildung zur Folge, sondern setzen voraus, dass die Störsignale, deren Amplituden unter Umständen die Höhe des Messwertsignals bei Nennlast erreichen können, auf dem gesamten Uebertragungsweg, sowohl im mechanischen als auch im elektrischen Teil der Waage, verzerrungsfrei verarbeitet werden, um eine Verfälschung des Messwertsignals zu vermeiden. Solche Bedingungen lassen sich aber nur dadurch erreichen, dass die Mess- und Auswerteelektronik der Waage für ein Mehrfaches der Nennlast ausgelegt wird (nämlich der möglichen Grösse des D-Anteils des Regelsignals entsprechend), was mit erheblichen Kosten verbunden ist.

Die Erfindung bezweckt die Schaffung einer Waage der eingangs genannten Art, bei der Störschwingungen von den Einrichtungen zur Messwertbildung, also insbesondere von der erwähnten Vergleichsschaltung und den nachfolgenden Zähl-und Anzeigeeinrichtungen, ferngehalten werden, und zwar ohne Einbusse an Regelgeschwindigkeit und ohne eine Ueberdimensionierung der Messelektronik und der Auswerte-Elektronik der Waage.

Aus der deutschen Patentschrift 21 50 479 ist eine Waage mit elektromagnetischer Lastkompensation bekannt, bei der die Lastkompensation durch einen Kompensationsstrom in Form eines Gleichstromes mit lastabhängiger Stärke bewirkt wird. Die Waage arbeitet mit einem PD-Regler. Der proportionale Regelsignalanteil steuert eine erste Stromquelle zur Erzeugung des lastabhängigen Kompensationsstromes, während der differentiale Regelsignalanteil eine zweite Stromquelle steuert, welche einen von der Messwertschwankungen abhängigen Wechselstrom erzeugt. Beide Ströme durchfliessen die elektromagnetische Kompensationseinrichtung, aber nur der den Messwert führende Kompensationsstrom gelangt zur Auswertung und Anzeige. Damit kommt die Messwertanzeige schneller zum Stillstand. Der Nachteil dieser Lösung besteht darin, dass eine zweite Stromquelle in Form eines spannungsgesteuerten Konstantstromgenerators erforderlich ist.

Die Erfindung macht ebenfalls von einer Aufspaltung des Regelsignals Gebrauch, vermeidet jedoch den Nachteil einer zweiten Stromquelle dadurch, dass erfindungsgemäss nur der proportionale und der integrale Regelsignalanteil die Impulsdauer der Gleichstromimpulse beeinflussen, der differentiale Regelsignalanteil dagegen eine Amplitudenmodulation der Gleichstromimpulse bewirkt.

Die praktische Ausführung der Erfindung ist vorzugsweise dadurch gekennzeichnet, dass der Regelverstärker zwei Regelsignalausgänge aufweist, wobei der erste Regelsignalausgang eine den proportionalen und integralen Regelsignalanteil darstellende Spannung und der zweite Regelsignalausgang eine den differentialen Regelsignalanteil darstellende Spannung führt und der erste Regelsignalausgang mit der Vergleichsschaltung und der zweite Regelsignalausgang mit einem in den Kompensationsstromkreis eingeschalteten Amplitudenmodulator verbunden ist.

Der der Impulsdauer der Gleichstromimpulse proportionale, ebenfalls ein Mass für die Last darstellende Mittelwert des Kompensationsgleichstromes bleibt bei der Amplitudenmodulation unverändert, d.h. es wird dabei keine zusätzliche, den Messwert verfälschende Gleichstromkomponente in den Kompensationsstromkreis eingeführt, da einerseits der differentielle Regelsignalanteil, welcher den Amplitudenmodulator beaufschlagt, naturgemäss keine Gleichspannungskomponente enthält und andererseits die Impulsfrequenz (Trägerfrequenz) der Gleichstromimpulse wesentlich höher ist als die Frequenz (Modulationsfrequenz) der in der Praxis zu erwartenden Störsignale.

Für die Erzeugung des Kompensations-Gleichstromes ist bei Waagen der beschriebenen Art normalerweise eine spannungsgesteuerte Konstantstromquelle vorhanden, die, von einer konstanten Steuerspannung (Referenzspannung) geführt, dem Kompensationsstromkreis einen konstanten Gleichstrom einprägt. Diese Konstantstromquelle kann nun zugleich als Amplitudenmodulator dienen, indem dessen konstanter Steuerspannung die den differentialen Regelsignalanteil darstellende Spannung überlagert wird. Auf diese Weise lässt sich eine Lösung nach der Erfindung ohne Mehraufwand in die Praxis umsetzen.

Zu diesem Zweck kann die diesbezügliche Schaltungsanordnung beispielsweise so ausgebildet sein, dass die Konstantstromquelle einen als Spannungsfolger geschalteten Operationsverstärker aufweist, an dessen nichtinvertierendem Eingang eine Referenzspannung anliegt und dessen Ausgangssignal einen den Kompensationsstrom führenden Feldeffekttransistor steuert, der mit einem Referenzwiderstand in Reihe geschaltet ist, und dass der zweite Regelsignalausgang des Regelverstärkers mit dem invertierenden Eingang des Operationsverstärkers verbunden ist.

In der Zeichnung ist ein Ausführungsbeispiel der Erfindung dargestellt, und zwar zeigen:
- Figur 1: ein Blockschaltbild des elektrischen Teils der Waage,
- Figur 2: ein Schaltbild der spannungsgesteuerten Konstantstromquelle und
- Figur 3: ein Schaltbild des Regelverstärkers.

Die Wägezelle 1 der im übrigen nicht dargestellten Waage kann nach den Angaben in der DE-PS 22 10 446 aufgebaut sein und umfasst eine elektromagnetische Kompensationseinrichtung 2, die einer lastabhängigen Auslenkung der Waage entgegenwirkt, und einen auf eine Auslenkung der Waage ansprechenden Nullage-Detektor 3. Der Kompensationseinrichtung 2 werden über eine periodisch schliessende elektronische Schalteinrichtung 5 Stromimpulse zugeführt, deren Impulsdauer durch die Schliessdauer der Schalteinrichtung 5 bestimmt ist und deren mittlere Amplitude durch eine spannungsgesteuerte Konstantstromquelle 6 konstant gehalten wird.

Die Anschaltdauer der Gleichstormquelle 6 wird gesteuert durch eine Regelschaltung, welche den Nullage-Detektor 3, einen Regelverstärker 8 und eine die Schalteinrichtung 5 steuernde Vergleichsschaltung 9 umfasst. Der Regelverstärker 8 ist als PID-Regler ausgebildet; er enthält also Integrier- und Differenzierglieder und liefert ein Regelsignal, das einen proportionalen (P), einen integralen (I) und einen differentialen (D) Regelsignalanteil aufweist. Zur Aufspaltung des Regelsignals weist der Regelverstärker zwei Regelsignalausgänge 10 und 11 auf, wobei der erste Regelsignalausgang 10 eine den proportionalen und integralen Regelsignalanteil PI darstellende Spannung und der zweite Regelsignalausgang 11 eine den differentialen Regelsignalanteil D darstellende Spannung führt. Der erste Regelsignalausgang 10 ist mit der Vergleichsschaltung 9 verbunden, in der die vom Regelverstärker 8 zugeführte Spannung während jeder Anschaltperiode mit einer zeitlich grösser werdenden Spannung verglichen wird. Letztere wird von einem Sägezahnspannungsgenerator 12 geliefert. Ueber eine während jeder Anschaltdauer geöffnete Torschaltung 13 gelangen Zählimpulse von einem Zählimpulsgenerator 14 an eine Auswerteeinrichtung 15, welche einen Zähler enthält und das den Messwert darstellende Zählergebnis einer Anzeigeeinrichtung 16 zuführt.

Die Konstantstromquelle 6 dient zugleich als Amplitudenmodulator. Sie wird einerseits von einer Konstantspannungsquelle 17 beeinflusst, welche mit ihrer konstanten Referenzspannung dafür sorgt, dass die mittlere Amplitude der Gleichstromimpulse konstant bleibt. Andererseits wird die Konstantstromquelle 6 mit dem vom zweiten Regelsignalausgang 11 des Regelverstärkers 8 abgenommenen differentialen Regelsignalanteil D beaufschlagt, der eine Amplitudenmodulation der Gleichstromimpulse bewirkt.

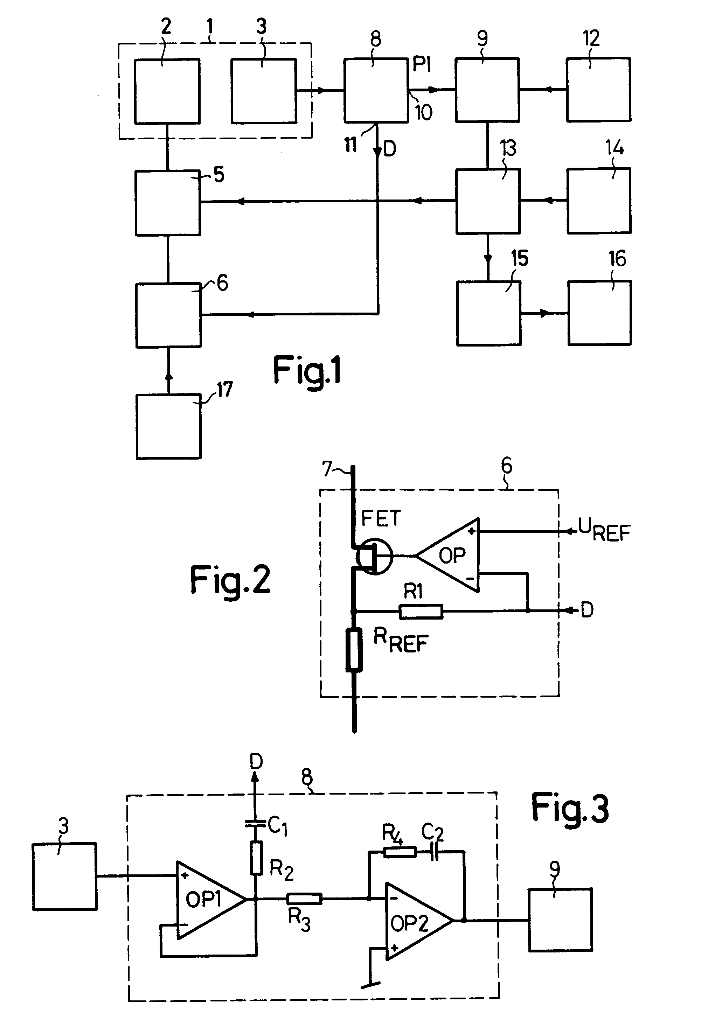

Die Figur 2 zeigt an einem Ausführungsbeispiel den schaltungsgemässen Aufbau der Konstantstromquelle 6. Diese enthält einen als Spannungsfolger geschalteten Operationsverstärker OP, an dessen nichtinvertierendem Eingang die konstante Referenzspannung U_{REF} der Konstantspannungsquelle 17 anliegt und dessen Ausgangssignal einen den Kompensationsstrom führenden Feldeffekttransistor FET steuert. Der letztere ist mit einem Referenzwiderstand R_{REF} in Reihe geschaltet, wobei der Verbindungspunkt über einen Widerstand R₁ an den invertierenden Eingang des Operationsverstärkers OP angeschlossen ist. Die den differentialen Regelsignalanteil D darstellende Spannung ist am invertierenden Eingang des Operationsverstärkers OP wirksam und wird auf diese Weise der konstanten Referenzspannung U_{REF} überlagert.

Eine Ausführungsmöglichkeit in bezug auf die beschriebene Aufspaltung des Regelsignals zeigt das Schaltbild des Regelverstärkers 8 nach Figur 3. Das vom Nullage-Detektor 3 gelieferte Signal gelangt an den nichtinvertierenden Eingang eines galvanisch gegengekoppelten Operationsverstärkers OP1, an dessen Ausgang ein aus dem Widerstand R₂ und dem Kondensator C₁ bestehendes Differenzierglied angeschlossen ist, über das der differentiale Regelsignalanteil D abgenommen werden kann. Derselbe Ausgang ist über einen Widerstand R₃ mit dem invertierenden Eingang eines zweiten gegengekoppelten Operationsverstärkers OP2 verbunden, der ein aus dem Widerstand R₄ und dem Kondensator C₂ bestehendes Integrierglied im Gegenkoppelungszweig aufweist. Am Ausgang dieses zweiten Operationsverstärkers OP2 fällt der proportionale und integrale Regelsignalanteil PI an, welcher der Vergleichsschaltung 9 zugeführt wird.

Auf diese Weise ist gewährleistet, dass die ein Mass für die Wägelast darstellende Impulsdauer der Gleichstromimpulse nur vom proportionalen und integralen Regelsignalanteil PI beeinflusst werden, nicht aber durch den von den allfälligen (z.B. erschütterungsbedingten) Bewegungen der Waage geprägten differentialen Regelsignalanteil D, der seine Regelfunktion durch eine reine Amplitudenmodulation der Gleichstromimpulse ausübt, welche auf das Messsignal keinen Einfluss hat.

## Patentansprüche

1. Waage mit elektromagnetischer Lastkompensation, bei der die Lastkompensation durch einen Kompensationsstrom in Form von Gleichstromimpulsen mit lastabhängiger Impulsdauer bewirkt wird und ein von der lastabhängigen Auslenkung der Waage abgeleitetes Regelsignal die Impulsdauer der Gleichstromimpulse bestimmt, wobei das Regelsignal einen proportionalen (P), einen integralen (I) und einen differentialen (D) Regelsignalanteil aufweist, dadurch gekennzeichnet, dass nur der proportionale und der integrale Regelsignalanteil (PI) die Impulsdauer der Gleichstromimpulse beeinflussen, der differentiale Regelsignalanteil (D) dagegen eine Amplitudenmodulation der Gleichstromimpulse bewirkt.

2. Waage nach Anspruch 1, umfassend eine elektromagnetische Kompensationseinrichtung (2), die einer lastabhängigen Auslenkung der Waage entgegenwirkt, eine Gleichstromquelle (6), die an die Kompensationseinrichtung periodisch anschaltbar ist und dieser Gleichstromimpulse zuführt, eine die Anschaltdauer innerhalb jeder Anschaltperiode steuernde Regelschaltung, bestehend aus einem auf eine Auslenkung der Waage aus der Nullage ansprechenden Nullage-Detektor (3), einem Integrier- und Differenzierglieder (RC) enthaltenden Regelverstärker (8), einer zwischen der Gleichstromquelle (6) und der Kompensationseinrichtung (2) vorgesehenen Schalteinrichtung (5) und einer diese steuernden Vergleichschaltung (9), welche während jeder Anschaltperiode eine vom Regelverstärker abgegebene Spannung mit einer zeitlich grösser werdenden Spannung vergleicht, ferner einen Zählimpulsgenerator (14), dessen während jeder Anschaltdauer der Gleichstromquelle abgegebene Zählimpulse ein Mass für die Wägelast darstellen und über einen Zähler (15) einer digitalen Anzeigeeinrichtung (16) zugeführt werden, dadurch gekennzeichnet, dass der Regelverstärker (8) zwei Regelsignalausgänge (10, 11) aufweist, wobei der erste Regelsignalausgang (10) eine den proportionalen und integralen Regelsignalanteil (PI) darstellende Spannung und der zweite Regelsignalausgang (11) eine den differentialen Regelsignalanteil (D) darstellende Spannung führt und der erste Regelsignalausgang (10) mit der Vergleichschaltung (9) und der zweite Regelsignalausgang (11) mit der Gleichstromquelle (6) verbunden ist.

3. Waage nach Anspruch 2, mit einer spannungsgesteuerten Konstantstromquelle (6) für die Erzeugung des Kompensationsstromes, dadurch gekennzeichnet, dass die Konstantstromquelle zugleich als Amplitudenmodulator dient, indem deren konstanter Referenzspannung (U_{REF}) die den differentialen Regelsignalanteil (D) darstellende Spannung überlagert wird.

4. Waage nach Anspruch 3, dadurch gekennzeichnet, dass die Konstantstromquelle (6) einen als Spannungsfolger geschalteten Operationsverstärker (OP) aufweist, an dessen nichtinvertierendem Eingang (+) die Referenzspannung (U_{REF}) anliegt und dessen Ausgangssignal einen den Kompensationsstrom führenden Feldeffekttransistor (FET) steuert, der mit einem Referenzwiderstand (R_{REF}) in Reihe geschaltet ist, und dass der zweite Regelsignalausgang (11) des Regelverstärkers (8) mit dem invertierenden Eingang (-) des Operationsverstärkers (OP) verbunden ist.

5. Waage nach Anspruch 2, dadurch gekennzeichnet, dass der Regelverstärker (8) zwei hintereinander geschaltete, einzeln gegengekoppelte Operationsverstärker (OP1, OP2) aufweist, dass an den Ausgang des ersten Operationsverstärkers (OP1) ein Differenzierglied (R₂, C₁) für die Auskopplung des differentialen Regelsignalanteils (D) angeschlossen ist und dass der zweite Operationsverstärker (OP2) im Gegenkopplungskreis ein Integrierglied (R₄, C₂) aufweist, so dass an seinem Ausgang der proportionale und integrale Regelsignalanteil (PI) anfällt.

## Claims

1. A balance with electromagnetic load compensation wherein load compensation is produced by a compensation current in the form of dc pulses of load-dependent pulse width and a regulating signal which is derived from the load-dependent deflection of the balance determines the pulse width of the dc pulses, the regulating signal having a proportional (P), an integral (I) and a differential (D) regulating signal component, characterised in that only the proportional and the integral regulating signal components (PI) influence the pulse width of the dc pulses, whereas the differential regulating signal component (D) produces amplitude modulation of the dc pulses.

2. A balance according to claim 1 including an electromagnetic compensation arrangement (2) which opposes a load-dependent deflection of the balance, a direct current source (6) which can be periodically connected to the compensation arrangement and supplies same with dc pulses, a regulating circuit which controls the connection time within each connection period, comprising a zero position detector (3) which is responsive to deflection of the balance out of the zero position, a regulating amplifier (8) which includes integrating and differentiating members (RC), a switching device (5) provided between the direct current source (6) and the compensation arrangement (2), and a comparison circuit (9) which controls the switching device and which during each connection period compares a voltage outputted by the regulating amplifier to a voltage which increases in time, further comprising a counting pulse generator (14) whose counting pulses which are outputted during each connection time of the direct current source represent a measurement of the weighing load and are supplied by way of a counter (15) to a digital display (16), characterised in that the regulating amplifier (8) has two regulating signal outputs (10, 11), wherein the first regulating signal output (10) carries a voltage representing the proportional and integral regulating signal components (PI) and the second regulating signal output (11) carries a voltage representing the differential regulating signal component (D) and the first regulating signal output is connected to the comparison circuit (9) and the second regulating signal output (11) is connected to the direct current source (6).

3. A balance according to claim 2 having a voltage-controlled constant current source (6) for production of the compensation current characterised in that the constant current source serves at the same time as an amplitude modulator by its constant reference voltage (U_{REF}) having superimposed thereon the voltage representing the differential regulating signal component (D).

4. A balance according to claim 3 characterised in that the constant current source (6) has an operational amplifier (OP) which is connected as a voltage follower and to whose non-inverting input (+) the reference voltage (U_{REF}) is applied and whose output signal controls a field effect transistor (FET) which carries the compensating current and which is connected in series with a reference resistor (R_{REF}), and that the second regulating signal output (11) of the regulating amplifier (8) is connected to the inverting input (-) of the operational amplifier ( OP).

5. A balance according to claim 2 characterised in that the regulating amplifier (8) has two operational amplifiers (OP1, OP2) which are connected in succession and which have individual negative feedback, that a differentiating member (R₂,C₁) for coupling out the differential regulating signal component (D) is connected to the output of the first operational amplifier (OP1) and that the second operational amplifier (OP2) has an integrating member (R₄,C₂) in the negative feedback circuit so that the proportional and integral regulating signal components (PI) occur at its output.

## Revendications

1. Balance à compensation électromagnétique de la charge, dans laquelle la compensation de la charge est produite par un courant de compensation ayant la forme d'impulsions de courant continu dont la durée des impulsions est fonction de la charge et un signal de réglage dérivé de la déviation de la balance en fonction de la charge détermine la durée des impulsions de courant continu, le signal de réglage comprenant une fraction proportionnelle (P), une fraction intégrale (I) et une fraction différentielle (D), caractérisée en ce que seule la fraction proportionnelle et intégrale (PI) du signal de réglage fait varier la durée des impulsions de courant continu, mais par contre la fraction différentielle (D) du signal de réglage provoque une modulation en amplitude des impulsions de courant continu.

2. Balance selon la revendication 1, comprenant un dispositif électromagnétique de compensation (2) qui s'oppose à une déviation de la balance en fonction de la charge, une source de courant continu (6) qui peut être branchée périodiquement sur le dispositif de compensation et lui envoie des impulsions de courant continu, un circuit de réglage qui commande la durée de branchement pendant chaque période de branchement et qui se compose d'un détecteur de position zéro (3) qui répond à une déviation de la balance par rapport à la position zéro, d'un amplificateur de réglage (8) contenant des éléments intégrateur et différentiateur (RC), d'un dispositif de commutation (5) prévu entre la source de courant continu (6) et le dispositif de compensation (2) et d'un circuit comparateur (9) qui commande ce dispositif de commutation et qui compare pendant chaque période de branchement une tension émise par l'amplificateur de réglage avec une tension qui augmente avec le temps, ladite balance comprenant par ailleurs un générateur (14) d'impulsions de comptage dont les impulsions de comptage émises pendant chaque durée de branchement de la source de courant continu représentent une mesure de la charge de pesée et sont dirigées par l'intermédiaire d'un compteur (15) sur un dispositif d'affichage numérique (16), caractérisée en ce que l'amplificateur de réglage (8) comprend deux sorties (10, 11) de signal de réglage, la première sortie (10) de signal de réglage émettant une tension représentant la fraction proportionnelle et intégrale (PI) du signal de réglage et la seconde sortie (11) de signal de réglage émettant une tension représentant la fraction différentielle (D) du signal de réglage et la première sortie (10) de signal de réglage est raccordée au circuit comparateur (9) et la seconde sortie (11) de signal de réglage est raccordée à la source de courant constant (6).

3. Balance selon la revendication 2, équipée d'une source de courant constant (6) commandée en tension pour la production du courant de compensation, caractérisée en ce que la source de courant constant sert également de modulateur d'amplitude par le fait que la tension représentant la fraction différentielle (D) du signal de réglage est superposée à sa tension constante de référence (U_{REF}).

4. Balance selon la revendication 3, caractérisée en ce que la source de courant constant (6) comprend un amplificateur opérationnel (OP) monté en suiveur de tension et à l'entrée sans inversion (+) duquel est appliquée la tension de référence (U_{REF}) et dont le signal de sortie commande un transistor à effet de champ (FET) qui fait passer le courant de compensation et qui est monté en série avec une résistance de référence (R_{REF}), et en ce que la seconde sortie (11) de signal de réglage de l'amplificateur de réglage (8) est reliée à l'entrée avec inversion (-) de l'amplificateur opérationnel (OP).

5. Balance selon la revendication 2, caractérisée en ce que l'amplificateur de réglage (8) comprend deux amplificateurs opérationnels (OP1, OP2) montés à la suite l'un de l'autre et à contre-réaction individuelle, en ce qu'un élément différentiateur (R₂, C₁) est connecté à la sortie du premier amplificateur opérationnel (OP1) pour le découplage de la fraction différentielle (D) du signal de réglage et en ce que le second amplificateur opérationnel (OP2) comprend dans le circuit de contre-réaction un élément intégrateur (R₄, C₂) de façon que la fraction proportionnelle et intégrale (PI) du signal de réglage apparaisse à sa sortie.
